# EUROPÄISCHE PATENTSCHRIFT

(11) **EP 4 033 655 B1**
(45) Veröffentlichungstag und Bekanntmachung des Hinweises auf die Patenterteilung: **12.03.2025**
(21) Anmeldenummer: 22151076.1
(22) Anmeldetag: 12.01.2022
(51) Int. Cl.: H02P 6/182, H02P 6/18, H02P 29/032, H02P 29/60

(54) **VERFAHREN UND ANSTEUERUNGSVORRICHTUG ZUR THERMISCHEN ÜBERWACHUNG EINES MINDESTENS ZWEIPHASIGEN BÜRSTENLOSEN MOTORS**
METHOD AND DRIVING APPARATUS FOR THERMAL MONITORING OF AN AT LEAST TWO-PHASE BRUSHLESS MOTOR
PROCÉDÉ ET DISPOSITIF D'ENTRAÎNEMENT DE SURVEILLANCE THERMIQUE D'UN MOTEUR SANS BALAI AU MOINS BIPHASÉ

(30) Priorität: 20.01.2021 BE 202105032
(43) Veröffentlichungstag der Anmeldung: 27.07.2022
(73) Patentinhaber: Miele & Cie. KG, 33332 Gütersloh (DE)
(72) Erfinder: Neufeld, Alexander, 33619 Bielefeld (DE); Gessat, Ulrich, 33378 Rheda-Wiedenbrück (DE); Rodehüser, Tobias, 59329 Wadersloh (DE)

(56) Entgegenhaltungen:
- EP-A1- 2 826 602
- DE-A1- 102017 121 829
- US-A- 5 327 053
- US-A- 5 473 240
- US-A1- 2019 334 465
- US-A1- 2020 007 056
- US-A1- 2020 382 028

## Beschreibung

Die Erfindung betrifft ein Verfahren zur thermischen Überwachung eines mindestens zweiphasigen bürstenlosen Motors gemäß dem Patentanspruch 1 und eine Ansteuerungsvorrichtung zum Ansteuern eines mindestens zweiphasigen bürstenlosen Motors gemäß dem Patentanspruch 5.

Zu den elektrischen Antrieben gehören die Synchronmotoren als Einphasen- oder Drehstrom-Synchronmaschinen im Motorbetrieb. Der Rotor bzw. der Läufer weist eine konstante Magnetisierung auf, welche im Betrieb synchron von einem bewegten magnetischen Drehfeld im Stator mitgenommen wird, woraus sich die Dreh- bzw. Rotationsbewegung des Rotors innerhalb des Stators bzw. Ständers ergibt. Mit anderen Worten wird die, üblicherweise dreisträngige, Drehstromwicklung des Stators durch eine geeignete Schaltung derart angesteuert, dass seitens der Spulen des Stators ein wanderndes magnetisches Feld erzeugt wird, welches den Rotor mitzieht und hierdurch in Rotation versetzt. Die Dreh- bzw. Rotationsbewegung des Rotors des laufenden Synchronmotors ist dabei synchron zur Wechselspannung der Wicklungen des Stators. Die Drehzahl der Drehbewegung des Rotors ist über die Polpaarzahl der Wicklungen des Stators mit der Frequenz der Wechselspannung verknüpft. Zum anderen kann das magnetische Feld des Rotors durch Permanentmagnete erzeugt werden, was als Selbsterregung bezeichnet wird. In diesem Fall kann auf die elektrische Kontaktierung zwischen Stator und Rotor verzichtet werden. Dies kann die zuvor genannten Nachteile vermeiden sowie insgesamt das Gewicht, den Bauraum und die Kosten derartiger permanenterregter Synchronmotoren geringhalten. Derartige permanenterregte Synchronmotoren mit einer schaltenden Elektronik werden daher üblicherweise auch als bürstenlose Motoren (Englisch: Brushless direct current motor - kurz: BLDC motor) bezeichnet. Die Spulenstränge des Stators können über einen Vierquadrantensteller angesteuert werden. Die Elektronik zur Ansteuerung der Brücke ist ein geregelter Frequenzumrichter. Üblicherweise werden bürstenlose Motoren dreiphasig ausgebildet, da sie dann den Vorteil einer definierten Läuferstellung bei hoher Dynamik, hohem Drehmoment und hoher Effizienz aufweisen.

Charakteristisch für bürstenlose Motoren ist ihre Kommutierung, welche zum Beispiel bei einem dreiphasigen Stator aus sechs Blöcken bzw. Sektoren pro Drehfelddurchlauf, d.h. pro Motorumdrehung, besteht, welche sich jeweils vom Schaltzustand der Brückenschaltung unterscheiden. Dabei sind immer lediglich zwei Gegentaktstufen der Brücke aktiv und die dritte Gegentaktstufe befindet sich im Zustand "floating". Die Spannung an diesem Brückenpunkt wird durch das Schaltungsnetz gemäß dem Stern-Ersatzschaltbild definiert. Die Brückensteuerung sorgt dafür, dass immer die Motorphase "floating" ist, welche - bei trapezoider Gegenspannung - gerade die Polarität wechselt.

Da die Brückensteuerung automatisch weiterschaltet, befindet sich das Statorfeld immer in dem Block mit der optimalen Magnetflussänderung, d.h. mit der maximalen Generatorspannung. Der bürstenlose Motor dreht somit hoch, bis seine Generatorspannung der Versorgungsspannung entspricht. Dann ist die maximale Drehzahl bzw. die Betriebsdrehzahl erreicht und wird konstant gehalten. Eine Steuerung bzw. Änderung der Drehzahl des Rotors kann somit über die Änderung der Versorgungsspannung erfolgen.

Die Steuerung der Kommutierung erfolgt in Abhängigkeit der aktuellen Rotorposition, welche über wenigstens einen Positionssensor zum Beispiel als Hall-Sensor erfasst werden kann, was jedoch zu einem entsprechenden zusätzlichen Aufwand bzw. zu entsprechenden Kosten führt sowie Bauraum erfordert.

Alternativ kann daher eine sensorlose Kommutierung umgesetzt und auf Positionssensoren verzichtet werden, indem die aktuelle Rotorposition indirekt durch die Messung von elektrischen Parametern an den Spulen gewonnen wird. Hierzu kann beispielsweise die in den Spulen des Stators ausgelöste EMK (elektromotorische Kraft) erfasst und von der elektronischen Steuerschaltung ausgewertet werden, was jedoch erst ab einer gewissen Mindestdrehzahl erfolgen kann.

Mit anderen Worten ist ein bürstenloser Motor (BLDC-Motor) konstruktiv gesehen eine Drehfeldmaschine, welche keinen mechanischen Kommutator benötigt. Der Rotor beinhaltet einen oder mehrere Permanentmagnete. Durch die Wechselwirkung zwischen Statorfeld und Rotorfeld entsteht ein elektrisches Moment, das zu einer Rotation führen kann.

Zum Betrieb eines bürstenlosen Motors ist üblicherweise ein Motorumrichter notwendig. Der Motorumrichter beinhaltet üblicherweise im Wesentlichen ein Controller sowie Leistungshalbleiter zur Ansteuerung der Motorphasen. Außerdem ist üblicherweise ein Zwischenkreis vorhanden, aus dem der bürstenlose Motor gespeist wird.

Anders als die unter dem Begriff permanenterregte Synchron-Maschinen (PMSM) oder PMAC bekannten Motoren werden bei einem bürstenlosen Motor z.B. jeweils nur zwei Phasen von drei gleichzeitig bestromt und die dritte Phase ist stromlos. Die Auswahl der zu bestromenden Phasen ist von der Rotorlage abhängig. Der Übergang von einem Sektor bzw. Block zum nächsten wird auch "elektronische Kommutierung" genannt; deswegen auch die Bezeichnung "brushless" oder "elektronisch kommutiert". Die für die Kommutierung eines bürstenlosen Motors notwendige Information über die Rotorlage wird üblicherweise über einen Lagesensor wie beispielsweise Hall-Sensoren, Resolver oder Inkrementalgeber gemessen.

Aus dem Stand der Technik sind verschiedene Lösungen bekannt, die diese Kommutierung ohne einen Lagesensor erlauben. Der am meisten verbreitete Ansatz der sensorlosen Ansteuerung basiert darauf, die Rotorlage und die Kommutierungszeitpunkte durch Messung der induzierten Spannung in der inaktiven Phase zu ermitteln. Die Spannungspotenziale der Motorphase und des Motorsternpunkts werden über Spannungsteiler miteinander verglichen und der Nullübergang wird als Referenzzeitpunkt für die Kommutierung genommen.

US 5 473 240 A offenbart ein Verfahren zum Regeln eines bürstenlosen Permanentmagnet-Motors mit Statorphasenwicklungen, in Bezug auf die der Motor rotiert und in denen eine Gegen-EMK induziert wird, die eine Fundamental- Komponente und eine dritte harmonische Komponente besitzt, wobei der Motor von einer betrieblich mit ihm verbundenen Wechselrichterbrücke angesteuert wird.

DE 10 2017 121829 A1 offenbart ein Verfahren zum Betreiben eines elektronisch kommutierten mehrphasigen Elektromotors, bei dem die Kommutierungszeiten sensorlos mit Hilfe eines Komparators aus den Nulldurchgängen der Gegenelektromotorischen Kraft ermittelt werden, wobei die ermittelten Kommutierungszeiten in Abhängigkeit von einer Hysterese des Komparators korrigiert werden.

US 2020/007056 A1 offenbart eine Motorantriebsvorrichtung und ein Motorantriebssystem zum Verbessern einer Steuerungsstabilität trotz eines Ungleichgewichts in Nulldurchgangspunkten in einem sensorlosen Motor bereit, dessen Position eines Rotors durch eine elektromotorische Gegenkraft geschätzt wird.

EP 2 826 602 A1 offenbart ein elektrisches Werkzeug ist mit einer Sensoreinheit zum Erfassen der Drehposition eines bürstenlosen Motors, einer Treiberschaltung zum Zuführen von Leistung zu dem bürstenlosen Motor und einer Steuereinheit zum Steuern der Treiberschaltung. Wenn bestimmt wurde, dass die gegenwärtige Positionsinformation basierend auf dem Positionssignal des Sensors abnormal ist, führt die Steuereinheit einen Abnormalitätsstopp zum Stoppen der Antriebsleistung zu dem Motor aus. Wenn der bürstenlose Motor ausgewählt wird, um angetrieben zu werden, nachdem der Abnormalitätsstopp ausgeführt wurde, reaktiviert die Steuereinheit den bürstenlosen Motor, indem die Schaltelemente der Antriebsschaltung mit einem Tastverhältnis gesteuert werden, das niedriger ist als das Tastverhältnis vor dem Stoppen der Antriebsleistung.

US 2019/334465 A1 offenbart ein Motorantrieb mit einer Begrenzungsschaltungsanordnung, die einen Motor auf Basis eines Befehlsdrehmoments steuert und eine Begrenzungsrate berechnet, die das Befehlsdrehmoment begrenzt. Das Befehlsdrehmoment ist auf Basis der Begrenzungsrate begrenzt, die durch die Begrenzungsschaltungsanordnung berechnet wird. Der Motorantrieb umfasst außerdem eine Steuereinrichtung, die elektrische Leistung ausgibt, um den Motor auf Basis des begrenzten Befehlsdrehmoments anzutreiben.

US 2020/382028 A1 offenbart eine Steuereinheit die dafür ausgebildet ist, einen ersten Parameter aus dem Gegen-EMK-Signal zu bestimmen und mindestens einen dem ersten Parameter entsprechenden zweiten Parameter aus dem Gegen-EMK-Signal zu bestimmen. Die Steuereinheit verifiziert ferner auf Grundlage des ersten Parameters mindestens eine den mindestens einen zweiten Parameter enthaltende Bedingung und erfasst Stillstand oder Schrittverlust in dem Schrittmotor auf Grundlage der Verifizierung. Die vorliegende Erfindung verwendet eine Mustererfassung durch Identifizieren der charakteristischen Merkmale der Spitzen des Gegen-EMK-Signals, bei welchen es sich um Abfolge, Stärke und Polarität handelt. Diese charakteristischen Merkmale sind unabhängig von Drehzahl, Spiel und Last und erfordern keine komplexen Berechnungen und sind auch bei geringeren Drehzahlen sehr robust.

US 5 327 053 A offenbart eine Vorrichtung und ein Prozess zum Erfassen einer Rotorposition für einen verbesserten Motorstart. Die Vorrichtung erfaßt eine Zielgleichgewichtsposition des Rotors unter Verwendung eines Verstärkers mit fester Verstärkung, eines Fensterkomparators und einer Steigungsdetektorschaltung. Die Fensterkomparatorschaltungsanordnung qualifiziert die Spitzen des Gegen-EMK-Signals. Die Steigungsdetektorschaltung bestimmt die Spitze des Gegen-EMK-Signals, das durch den Fensterkomparator qualifiziert ist.

Bei derartigen bürstenlosen Motoren kann es zu einer Übererwärmung bzw. zu einer Überhitzung kommen, falls die Phasen seitens des geregelten Frequenzumrichters bestromt werden, jedoch die hierdurch zu bewirkende Drehbewegung des Rotors mechanisch vollständig blockiert oder zumindest behindert wird. Letzteres kann auch auf einer Schwergängigkeit des Rotors bzw. des anzutreibenden mechanischen Elements beruhen. Ferner kann auch eine falsche bzw. fehlerhafte Ansteuerung des geregelten Frequenzumrichters dazu führen, dass die zu bewirkende Drehbewegung des Rotors gar nicht oder nur unzureichend erzeugt werden kann.

In jedem Fall kann die dennoch erfolgende Bestromung der Phasen zu einer Erwärmung der Spulen des Stators führen, welche dessen zulässige Temperatur übersteigen und somit den bürstenlosen Motor überhitzen kann. Dies kann zu Beschädigungen der Spulen, des geregelten Frequenzumrichters sowie weiterer elektronischer Elemente und ggfs. zu einem Ausfall des bürstenlosen Motors führen.

Dies kann insbesondere bei bürstenlosen Motoren der Fall sein, welche ein durch ihren Rotor antreibbares Lüfterrad besitzen, welches der Erzeugung eines Luftstroms während der Rotation des Rotors dient und hierdurch den bürstenlosen Motor selbsttätig kühlen kann. Durch den Stillstand des Rotors fällt somit auch dessen selbsttätige Luftkühlung aus bzw. wird bei zu geringer Drehzahl des Rotors entsprechend in ihrer Wirkung gemindert, so dass die gewünschte Wirkung der Luftkühlung nicht erreicht werden kann.

Daher ist es üblich, bei derartigen bürstenlosen Motoren eine thermische Überwachung vorzusehen und bei Erreichen einer vorbestimmten Grenztemperatur den bürstenlosen Motor selbsttätig abzuschalten oder zumindest in seiner Leistung zu reduzieren, um eine thermische Überlastung durch Übererwärmung bzw. durch Überhitzung zu vermeiden.

Derartige thermische Überwachungen werden üblicherweise indirekt umgesetzt, indem nicht die Temperatur des bürstenlosen Motors selbst sensorisch erfasst, sondern ein Temperatursensor in der Nähe des bürstenlosen Motors bzw. dessen Statorspulen vorgesehen wird, welcher die Umgebungstemperatur der Luft erfassen kann. Somit wird die Temperatur der Luft in der Umgebung der Spulen des Stators des bürstenlosen Motors sensorisch erfasst und auf deren Temperatur wie zuvor beschrieben reagiert.

Eine derartige indirekte Temperaturüberwachung kann üblicherweise einen ausreichenden Schutz vor Übererwärmung bzw. Überhitzung bei derartigen bürstenlosen Motoren bieten, falls auf eine langsame Erwärmung des bürstenlosen Motors reagiert werden soll, welche ausreichend Zeit hat, die Umgebungstemperatur zu erwärmen und so von dem Temperatursensor erfasst zu werden. Dies kann bei einer reduzierten Drehzahl des Rotors des bürstenlosen Motors der Fall sein.

Kommt es, zum Beispiel aufgrund eines Stillstands des Rotors des bürstenlosen Motors, zu einer sehr schnellen Erwärmung der Statorspulen des bürstenlosen Motors, so kann dies üblicherweise über die zuvor beschriebene indirekte thermische Überwachung nicht ausreichend schnell erkannt werden, um hierauf reagieren und Beschädigungen des bürstenlosen Motors vermeiden zu können. Dies ist dadurch begründet, dass die thermische Kopplung zwischen den Statorspulen des bürstenlosen Motors und dem Temperatursensor, welche üblicherweise über mehrere Zentimeter Umgebungsluft erfolgt, derart schlecht ist bzw. langsam erfolgt, dass die hierdurch bewirkte Zeitverzögerung zu groß ist, um die Übererwärmung bzw. die Übererhitzung der Spulen des bürstenlosen Motors ausreichend schnell sensorisch erfassen zu können, als dass hierauf durch Abschaltung des bürstenlosen Motors noch wirkungsvoll reagiert werden könnte.

Zu beachten ist ferner, dass der Temperatursensor in der Umgebung der Spulen des bürstenlosen Motors sowie dessen Elektronik zusätzliche Kosten verursacht sowie Bauraum erfordert.

Der Erfindung stellt sich das Problem, ein Verfahren zur thermischen Überwachung eines mindestens zweiphasigen bürstenlosen Motors der eingangs beschriebenen Art bereitzustellen, so dass dessen Übererwärmung bzw. Überhitzung ausreichend schnell erkannt werden kann, um hierauf wirkungsvoll reagieren zu können. Dies soll insbesondere möglichst einfach, kostengünstig und bzw. oder flexibel umgesetzt werden können. Insbesondere soll dies ohne Temperatursensor erfolgen können. Zumindest soll eine Alternative zu bekannten derartigen Verfahren geschaffen werden. Erfindungsgemäß wird dieses Problem durch ein Verfahren mit den Merkmalen des Patentanspruchs 1 und durch eine Ansteuerungsvorrichtung mit den Merkmalen des Patentanspruchs 5 gelöst. Vorteilhafte Ausgestaltungen und Weiterbildungen der Erfindung ergeben sich aus den nachfolgenden Unteransprüchen.

Somit betrifft die Erfindung ein Verfahren zur thermischen Überwachung eines mindestens zweiphasigen bürstenlosen Motors, vorzugsweise ohne Rotorlagesensor, mit wenigstens den Schritten:
- Bestromen des Motors, wobei die Phasenspannung des Bestromens vorzugsweise mittels PWM-Steuerung eingestellt wird,
- Erfassen der Phasenspannung,
- Erfassen der Sternpunktspannung,
- Ermitteln der Differenzspannung als Differenz der erfassten Phasenspannung und der erfassten Sternpunktspannung,
- Ermitteln eines ersten Vorzeichenwechsels der ermittelten Differenzspannung zu einem ersten Zeitpunkt,
- Ermitteln eines zweiten Vorzeichenwechsels der gleichen Richtung der ermittelten Differenzspannung zu einem zweiten Zeitpunkt,
- Ermitteln der Zeitdifferenz zwischen dem ersten Zeitpunkt des ersten Vorzeichenwechsels und dem zweiten Zeitpunkt des zweiten Vorzeichenwechsels, und
- Ermitteln der Drehzahl des bürstenlosen Motors basierend auf der ermittelten Zeitdifferenz.

Der vorliegenden Erfindung liegt dabei die Erkenntnis zugrunde, dass aus der Drehzahl eines bürstenlosen Motors auf den thermischen Zustand und insbesondere auf eine Übererwärmung bzw. auf eine Überhitzung des bürstenlosen Motors geschlossen und hierdurch eine thermische Überwachung umgesetzt werden kann. Zumindest kann aus der Information der Drehzahl auf einen Stillstand des Rotors trotz Bestromung geschlossen werden, wenn die Drehzahl bei Null liegt. Entsprechend kann auch ohne die genaue Kenntnis und insbesondere ohne Temperatursensor auf eine mögliche bzw. drohende Übererwärmung bzw. Überhitzung des bürstenlosen Motors geschlossen und entsprechende Maßnahme wie eine Reduzierung der Leistung und insbesondere ein Beenden des Bestromens vorgenommen werden.

Das Ermitteln der Differenzspannung erfolgt unter Berücksichtigung des gemessenen Stroms, dieser verursacht einen Spannungsabfall an dem ohmschen Teil der Wicklung und die Änderung des Stroms bewirkt einen induktiven Anteil der Spannung. Die korrigierte Differenzspannung entspricht näherungsweise der induzierten Spannung EMK.

Hierzu kann die Drehzahl des bürstenlosen Motors ermittelt werden, indem die Differenzspannung ermittelt und deren gleichartige Nulldurchgänge, d.h. die sich periodisch wiederholenden Wechseln des Vorzeichens der induzierten Spannung jeweils von positiv nach negativ oder umgekehrt, ermittelt werden. Die zeitliche Differenz zwischen zwei unmittelbar aufeinanderfolgenden Vorzeichenwechseln von zum Beispiel positiv nach negativ als Nulldurchgänge von positiv nach negativ entspricht der Periodendauer der Bewegung bzw. der Rotation des Rotors des bürstenlosen Motors. Aus der Periodendauer ergibt sich umgekehrt proportional die Frequenz der Rotation des Rotors des bürstenlosen Motors, welche der Drehzahl des bürstenlosen Motors entspricht.

Die Erfindung betrifft auch ein Verfahren zur thermischen Überwachung eines mindestens zweiphasigen bürstenlosen Motors, vorzugsweise ohne Rotorlagesensor, mit wenigstens den Schritten:
- Bestromen von zwei Phasen, wobei die Phasenspannung des Bestromens vorzugsweise mittels PWM-Steuerung eingestellt wird,
- Erfassen der Phasenspannung,
- Erfassen der Sternpunktspannung,
- Ermitteln der Differenzspannung als Differenz der erfassten Phasenspannung und der erfassten Sternpunktspannung,
- Ermitteln wenigstens eines Extremwerts der ermittelten Differenzspannung, und
- Ermitteln der Drehzahl des bürstenlosen Motors basierend auf dem ermittelten Extremwert.

Eine thermische Überwachung basierend auf der ermittelten Drehzahl des bürstenlosen Motors erfolgt dadurch, dass aus dem zeitlichen Verlauf der ermittelten Differenzspannung wenigstens ein Extremwert in Form einer maximalen Amplitude oder einer minimalen Amplitude ermittelt wird. Da die Differenzspannung proportional zur Drehzahl des bürstenlosen Motors ist, kann die Drehzahl des bürstenlosen Motors auch auf diese Art und Weise ermittelt und wie zuvor beschrieben zur thermischen Überwachung genutzt werden. Gemäß einem Aspekt der Erfindung erfolgt das Ermitteln für wenigstens zwei Extremwerte der ermittelten Differenzspannung und das Verfahren weist die weiteren Schritte auf:
- Ermitteln der Differenz zwischen den beiden ermittelten Extremwerten,
- Vergleichen der ermittelten Differenz mit einem vorbestimmten Grenzwert, und
- bei Überschreiten oder Erreichen des vorbestimmten Grenzwertes

Reduzieren oder Beenden des Bestromens der zwei Phasen. Mit anderen Worten werden wenigstens zwei Extremwerte, welche zum Beispiel eine maximale Amplitude und eine minimale Amplitude oder auch zwei maximale oder zwei minimale Amplituden sein können, miteinander verglichen und dahingehend ausgewertet, ob deren Differenz innerhalb einer vorbestimmten Toleranz liegt. Ist dies der Fall, so kann das Ermitteln der Extremwerte der ermittelten induzierten Spannung als korrekt angesehen und hierauf basierend das Ermitteln der Drehzahl des bürstenlosen Motors ausgeführt werden, wie zuvor beschrieben. Andernfalls kann das Ermitteln der Extremwerte der ermittelten induzierten Spannung als fehlerhaft angesehen und entsprechend hierauf reagiert werden, indem zum Beispiel eine Fehlermeldung an einen Benutzer ausgeben und ggfs. das Bestromen der zwei Phasen verringert oder sogar beendet wird, um den Betrieb des bürstenlosen Motors vorsorglich einzustellen.

Gemäß einem weiteren Aspekt der Erfindung weist das Verfahren ferner wenigstens die nachfolgenden Schritte auf:
- Vergleichen der ermittelten Drehzahl mit einer vorbestimmten Drehzahl und
- bei Unterschreiten oder bei Erreichen der vorbestimmten Drehzahl, Reduzieren oder Beenden des Bestromens der zwei Phasen.

Auf diese Art und Weise kann die Schlussfolgerung aus der ermittelten Drehzahl auf eine mögliche thermische Überlastung des bürstenlosen Motors wie zuvor bereits erwähnt für jedes der beiden zuvor beschriebenen erfindungsgemäßen Verfahren umgesetzt werden. Gemäß einem weiteren Aspekt der Erfindung weist das Verfahren ferner wenigstens die nachfolgenden Schritte auf:
- Ermitteln der Differenz zwischen den beiden ermittelten Drehzahlen,
- Vergleichen der ermittelten Differenz mit einem vorbestimmten Grenzwert, und
- bei Überschreiten des vorbestimmten Grenzwertes

Reduzieren oder Beenden des Bestromens der zwei Phasen. Auf diese Art und Weise können die beiden zuvor beschriebenen Verfahren miteinander kombiniert angewendet werden, um sich gegenseitig zu plausibilisieren. Die beiden Verfahren können parallel und unabhängig voneinander ausgeführt werden. Die beiden Ergebnisse in Form der jeweils ermittelten Drehzahl des bürstenlosen Motors können dann miteinander verglichen werden, da diese, wie zuvor beschrieben, unabhängig voneinander zum gleichen Ergebnis führen müssen. Dies kann im Rahmen einer vorbestimmten Toleranz überprüft werden. Wird dabei eine unzulässig hohe Abweichung erkannt, so kann darauf geschlossen werden, dass eine der beiden ermittelten Drehzahlen fehlerhaft ist. Hierauf kann entsprechend reagiert werden, indem zum Beispiel eine Fehlermeldung an einen Benutzer ausgeben und ggfs. das Bestromen der zwei Phasen verringert oder sogar beendet wird, um den Betrieb des bürstenlosen Motors vorsorglich einzustellen. Andernfalls können beide ermittelte Drehzahlen als korrekt angesehen und eine der beiden Drehzahlen oder auch ein auf beiden Drehzahlen basierender Wert, zum Beispiel als Mittelwert, zur weiteren Durchführung des Verfahrens verwendet werden, wie zuvor beschrieben.

Gemäß einem weiteren Aspekt der Erfindung erfolgt das Erfassen der Phasenspannung gefiltert. Hierzu kann ein Filter mit einer vorbestimmten bekannten Charakteristik verwendet werden. Vorzugsweise kann die Amplitude der Phasenspannung bei höheren Frequenzen stärker gedämpft werden als bei niedrigeren Frequenzen. Durch die Berücksichtigung der Frequenz kann die gemessene Phasenspannung um die Dämpfung des Filters korrigiert werden. Hierdurch kann die Genauigkeit der erfassten Phasenspannung erhöht werden, was die Genauigkeit der hieraus resultierenden weiteren Verfahrensschritte entsprechend verbessern kann.

Gemäß einem weiteren Aspekt der Erfindung erfolgt das Erfassen der Sternpunktspannung gefiltert. Hierdurch können die zuvor beschriebenen Aspekte des gefilterten Erfassens der Phasenspannung entsprechend auf die Sternpunktspannung angewendet werden.

Die vorliegende Erfindung betrifft auch eine Ansteuerungsvorrichtung zum Ansteuern eines mindestens zweiphasigen bürstenlosen Motors ohne Rotorlagesensor, vorzugsweise gemäß einem Verfahren wie zuvor beschrieben, mit einer Steuerungseinheit, welche ausgebildet ist, den Motor zu bestromen, wobei die Phasenspannung des Bestromens vorzugsweise mittels PWM-Steuerung eingestellt wird, und mit einer Abtasteinrichtung, welche ausgebildet ist, die Phasenspannung und die Sternpunktspannung zu erfassen, wobei die Steuerungseinheit ferner ausgebildet ist, die Differenzspannung als Differenz der erfassten Phasenspannung und der erfassten Sternpunktspannung zu ermitteln, einen ersten Vorzeichenwechsel der ermittelten Differenzspannung zu einem ersten Zeitpunkt zu ermitteln, einen zweiten Vorzeichenwechsel der gleichen Richtung der ermittelten Differenzspannung zu einem zweiten Zeitpunkt zu ermitteln, die Zeitdifferenz zwischen dem ersten Zeitpunkt des ersten Vorzeichenwechsels und dem zweiten Zeitpunkt des zweiten Vorzeichenwechsels zu ermitteln und die Drehzahl des bürstenlosen Motors basierend auf der ermittelten Zeitdifferenz zu ermitteln.

Hierdurch kann eine Ansteuerungsvorrichtung bereitgestellt werden, um die entsprechenden zuvor beschriebenen Aspekte der Erfindung bzw. um das erfindungsgemäße zuvor beschriebene Verfahren bei einem mindestens zweiphasigen bürstenlosen Motor umzusetzen.

Die vorliegende Erfindung betrifft auch eine Ansteuerungsvorrichtung zur thermischen Überwachung eines mindestens zweiphasigen bürstenlosen Motors ohne Rotorlagesensor, gemäß einem Verfahren wie zuvor beschrieben, mit einer Steuerungseinheit, welche ausgebildet ist, zwei Phasen zu bestromen, wobei die Phasenspannung des Bestromens vorzugsweise mittels PWM-Steuerung eingestellt wird, und mit einer Abtasteinrichtung, welche ausgebildet ist, die Phasenspannung und die Sternpunktspannung zu erfassen, wobei die Steuerungseinheit ferner ausgebildet ist, wenigstens einen Extremwert der ermittelten induzierten Spannung zu ermitteln und die Drehzahl des bürstenlosen Motors basierend auf dem ermittelten Extremwert zu ermitteln.

Hierdurch kann eine Ansteuerungsvorrichtung bereitgestellt werden, um die entsprechenden zuvor beschriebenen Aspekte der Erfindung bzw. um das erfindungsgemäße zuvor beschriebene Verfahren bei einem mindestens zweiphasigen bürstenlosen Motor umzusetzen.

Die vorliegende Erfindung betrifft auch einen mindestens zweiphasigen bürstenlosen Motor, vorzugsweise ohne Rotorlagesensor, mit einer Ansteuerungsvorrichtung wie zuvor beschrieben. Hierdurch kann ein mindestens dreiphasiger bürstenloser Motor bereitgestellt werden, um die zuvor beschriebenen Aspekte der Erfindung bzw. um das erfindungsgemäße zuvor beschriebene Verfahren umzusetzen.

Die vorliegende Erfindung betrifft auch ein Haushaltsgerät mit mindestens einem mindestens zweiphasigen bürstenlosen Motor wie zuvor beschrieben. Hierdurch kann ein Haushaltsgerät bereitgestellt werden, um die zuvor beschriebenen Aspekte der Erfindung bzw. um das erfindungsgemäße zuvor beschriebene Verfahren umzusetzen.

Gemäß einem Aspekt der Erfindung weist das Haushaltsgerät einen, vorzugsweise wiederaufladbaren, elektrischen Energiespeicher auf und ist ausgebildet, mittels der gespeicherten elektrischen Energie des elektrischen Energiespeichers betrieben zu werden.

Diesem Aspekt der Erfindung liegt die Erkenntnis zugrunde, dass bei akkubetriebenen Haushaltsgeräten häufig vergleichsweise leistungsschwache bürstenlose Motoren eingesetzt werden, welche üblicherweise einen vergleichsweise geringen ohmschen Widerstand und eine vergleichsweise geringe Induktivität aufweisen, was die Proportionalität zwischen induzierter Spannung und Drehzahl begünstigt. Daher können die entsprechenden zuvor beschriebenen erfindungsgemäßen Aspekte, welche auf der Proportionalität zwischen induzierter Spannung und Drehzahl beruhen bzw. sich diese zunutze machen, insbesondere bei derartigen bürstenlosen Motoren von akkubetriebenen Haushaltsgeräten erfolgreich eingesetzt und genutzt werden.

Die induzierte Spannung ist immer proportional zur Drehzahl. Die induzierte Spannung wird normalerweise ermittelt, indem die Phasenspannung einer unbestromten Phase gemessen wird und die Differenz mit der Sternpunktspannung gebildet wird. Gemäß der Erfindung wird die Phasenspannung aber kontinuierlich gemessen, d.h. sowohl wenn die Phase bestromt ist als auch im unbestromten Zustand. Dadurch entspricht die gemessene Spannung nicht exakt der induzierten Spannung bzw. EMK. Die induzierte Spannung kann bei vergleichsweise geringem ohmschen Widerstand und einer vergleichsweise geringen Induktivität abgeleitet werden. Oder aber man berücksichtigt den gemessenen Strom bei der Bestimmung der induzierten Spannung. Man erhält allerdings nicht den genauen Wert der induzierten Spannung EMK.

Ohne Kenntnis über den Strom kann es auch vorkommen, dass ein sehr hoher Strom durch die Wicklung fließt, welcher zu einer Spannungsdifferenz an der Wicklung führt, welche ebenfalls als drehender Motor interpretiert wird. Deshalb kann der Strom mit berücksichtig werden. Wenn das Verhältnis von Strom und Spannungsdifferenz nicht in einem bestimmten Bereich liegt, steht der Motor oder dreht langsam und es fließt ein hoher Strom. In diesem Falle kann erfindungsgemäß ebenfalls abgeschaltet werden.

Mehrere Ausführungsbeispiele der Erfindung sind in den Zeichnungen rein schematisch dargestellt und werden nachfolgend näher beschrieben. Es zeigt
- Figur 1: eine Schaltung eines bekannten bürstenlosen Motors;
- Figur 2: Verläufe der Phasenspannungen der drei Phasen des bürstenlosen Motors der Figur 1;

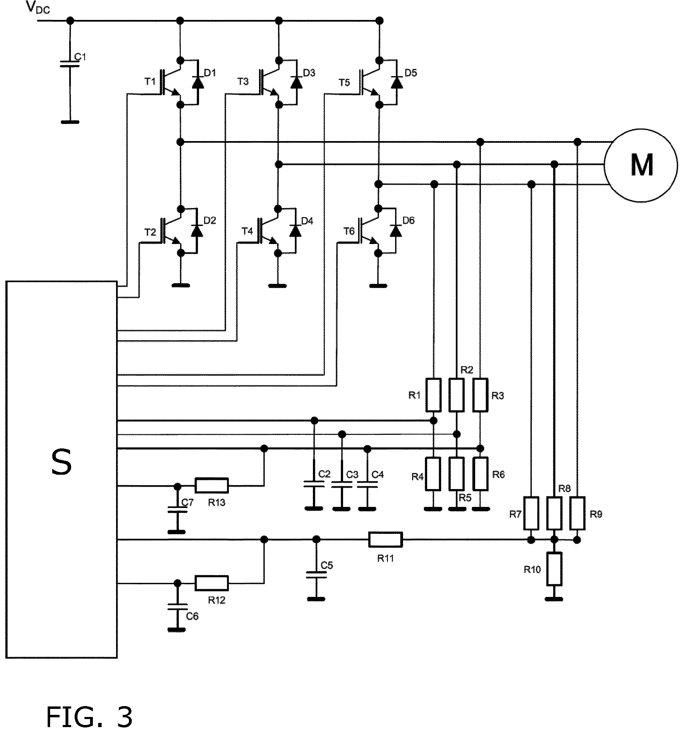

- Figur 3: eine Schaltung eines erfindungsgemäßen bürstenlosen Motors;
- Figur 4: ein Diagramm der Phasenspannung über der Drehzahl eines bürstenlosen Motors;
- Figur 5: die Verläufe von induzierter Spannung, Phasenspannung und Sternpunktspannung eines bürstenlosen Motors über der Zeit; und

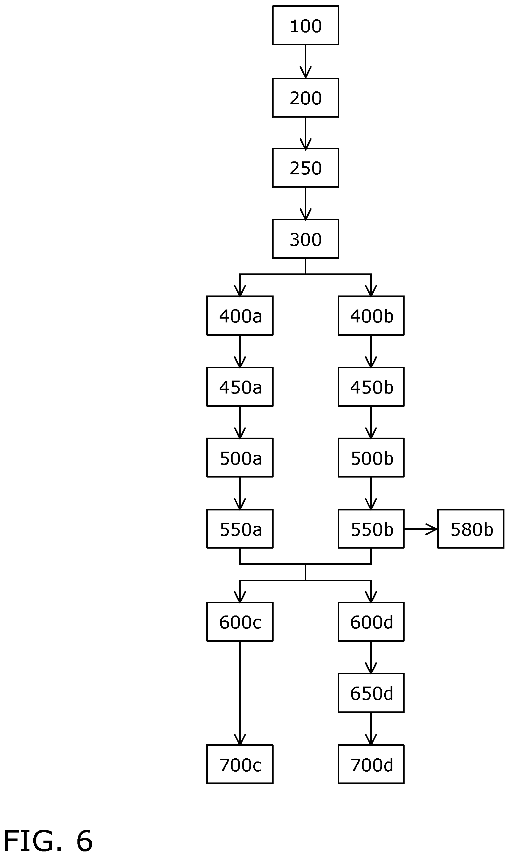

- Figur 6: ein Ablaufdiagramm mehrerer erfindungsgemäßer Verfahren.

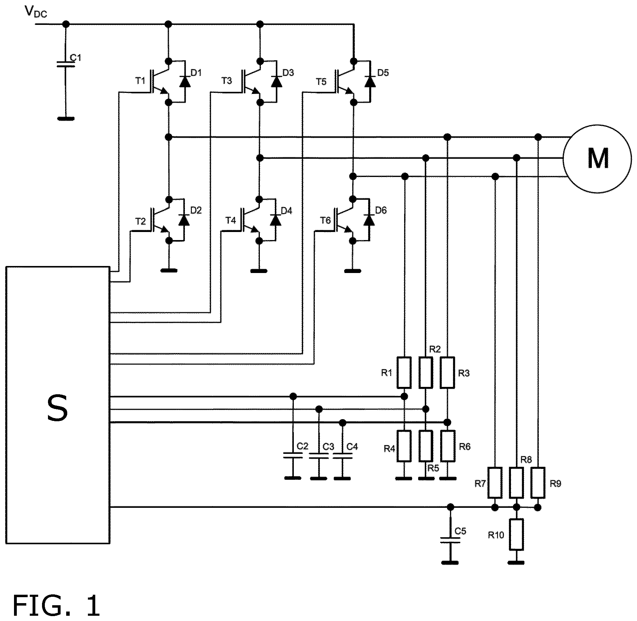

Figur 1 zeigt eine Schaltung eines bekannten bürstenlosen Motors M. Der bürstenlose Motor M, kurz BLDC-Motor M, wird über eine Steuerungseinheit S in Form eines geregelten Frequenzumrichters S angesteuert bzw. betrieben. Aus einer Gleichspannung V_{DC} als Zwischenkreisspannung V_{DC} wird über eine B6-Brücke mit sechs Transistoren T1-T6 und sechs Dioden D1-D6 ein dreiphasiges Drehfeld an den BLDC-Motor M gelegt. Hierdurch wird eine Rotation eines Rotors (nicht dargestellt) des BLDC-Motors M im Betrieb bewirkt.

Damit das Drehfeld, welches auf den Stator (nicht dargestellt) des BLDC-Motors M gegeben wird, passend zur Rotorlage ist, muss die Rotorlage bestimmt werden. In der Vergangenheit wurde dies über einen Sensor am BLDC-Motor M getan. Mit dem Aufkommen der sensorlosen Regelung wurde der Sensor durch die Messung elektrischer Größen in Kombination mit einem Software-Motormodell seitens der Steuerungseinheit S ersetzt. Zu diesem Zweck wurden die Phasenspannungen U_{Phase} der drei Phasen U, V, W und auch die Sternpunktspannung gemessen. Die Sternpunktspannung kann entweder am Sternpunkt des BLDC-Motors M gemessen oder über einen "künstlichen Sternpunkt" nachgestellt und gemessen werden. Die Schaltung der ohmschen Widerstände R8-R10 und des Kondensators C5 stellt den künstlichen Sternpunkt dar. Bei einem BLDC-Motor M mit Dreieckschaltung wird üblicherweise nur mit dem künstlichen Sternpunkt gearbeitet.

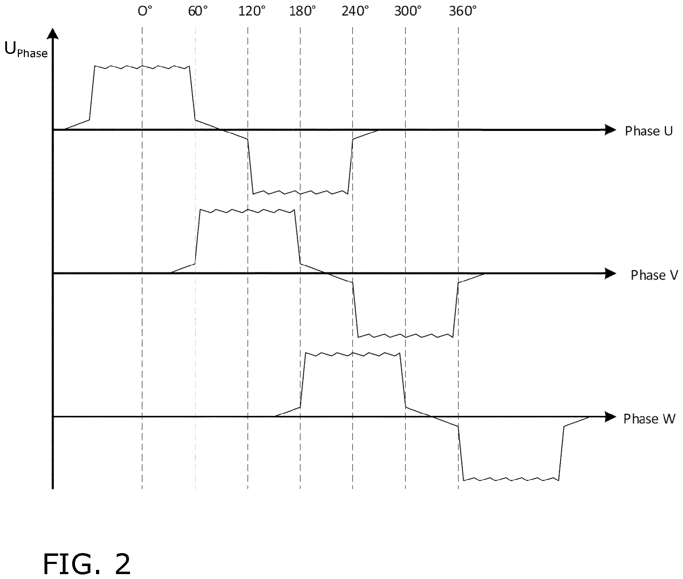

Figur 2 zeigt die Verläufe der Phasenspannungen U_{Phase} der drei Phasen U, V, W des bürstenlosen Motors M der Figur 1. Wie dem zeitlichen Verlauf der Phasenspannung U_{Phase} der Phase U zu entnehmen ist, so wird die Phase U 120° (zwei Sektoren) lang mit einer positiven Spannung aktiv beaufschlagt. Einen Sektor lang ist die Phase U strom- und spannungslos. In dieser Zeit kann die induzierte Spannung ΔU der Phase U gemessen werden, welche auch als elektromotorische Kraft (EMK) bezeichnet wird.

Die Nulllinie bei der Phasenspannung U_{Phase} ist die Sternpunktspannung. Dort, wo die Phasenspannung U_{Phase} die Sternpunktspannung kreuzt, liegt ein sogenannter Nulldurchgang der jeweiligen Phasenspannung U_{Phase} vor. Dieser Zeitpunkt des Nulldurchgangs der Phasenspannung U_{Phase} ist der Moment, wo der Stator und der Rotor zueinander ausgerichtet sind. Auf diese Nulldurchgänge wird gemessen. Somit kann in der Phase U bei einem einpoligen BLDC-Motor M zwei Mal ein Nulldurchgang während einer mechanischen Umdrehung (0° bis 360°) gemessen werden. Misst man in allen drei Phasen U, V, W den Strom, so kann während einer mechanischen Umdrehung sechs Mal die Rotorlage bestimmt werden. Auf diesem Prinzip bauen alle Steuerungseinheiten S von herkömmlichen BLDC-Motoren M auf.

Derartige BLDC-Motoren M werden üblicherweise auf eine übermäßige Erwärmung bzw. Überhitzung überwacht, d.h. es findet üblicherweise ein thermischer Schutz des BLDC-Motors M statt. Wenn der BLDC-Motor M nämlich zum Beispiel blockiert ist und trotzdem bestromt wird, so kann dies zu sehr hohen Strömen in den Spulen des Stators und damit zu einer Übererwärmung des BLDC-Motors M führen. Wenn der BLDC-Motor M dreht, so wird eine Spannung in den Wicklungen des Stators induziert. Diese induzierte Spannung sorgt dafür, dass der Strom in der Wicklung des Stators begrenzt wird. Wenn der BLDC-Motor M steht oder auch nur sehr langsam dreht, weil der BLDC-Motor M zum Beispiel sehr schwergängig ist, und trotzdem bestromt wird, kann dies zu sehr hohen Strömen und damit zu einer Übererwärmung der Wicklung des Stators führen.

Somit ist die Information, ob der Rotor des BLDC-Motors M dreht oder steht bzw. nur sehr langsam dreht, sehr hilfreich für den Thermoschutz. Wenn der BLDC-Motor nämlich M trotz der Ansteuerung bzw. des Bestromens der Phasen U, V, W nicht hochläuft, so sollte der BLDC-Motor M nach kurzer Zeit abgeschaltet werden, damit der BLDC-Motor M nicht überhitzt wird. Somit ist es vorteilhaft, einen Stillstand des BLDC-Motors M zu erkennen.

Für die Erkennung eines ungewollten Stillstands des BLDC-Motors M kann mittels einer sicherheitsgerichteten Software eines oder können mehrere Verfahren wie nachfolgend beschrieben durchgeführt werden, bei denen jeweils die gefilterte Sternpunktspannung über den Kondensator C6 und über den ohmschen Widerstand R12 und eine gefilterte Phasenspannung U_{Phase} über den Kondensator C7 und über den ohmschen Widerstand R13 des BLDC-Motors M von der Steuerungseinheit S erfasst werden.

Die Werte der Sternpunktspannung und der Phasenspannung U_{Phase} werden dabei gefiltert, um die PWM-Ansteuerung zu filtern. Die verwendeten Filter zur Sternpunktspannungs- und Phasenspannungsmessung haben eine bestimmte bekannte Charakteristik. So wird die Amplitude der Spannungen bei höheren Frequenzen stärker gedämpft als bei niedrigeren Frequenzen. Durch die Erfassung der Frequenz kann daher die gemessene Spannung um die Dämpfung des Filters korrigiert werden. Dies erhöht nochmal die Genauigkeit der erfindungsgemäßen Verfahren, welche im Folgenden beschrieben werden.

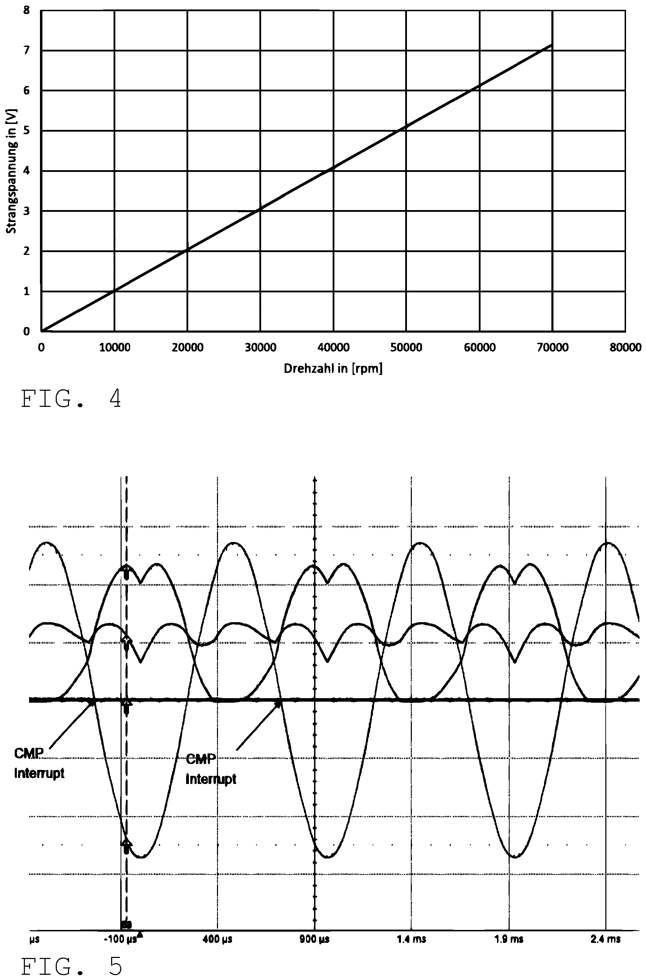

Wie man im Ersatzschaltbild bzw. in der Schaltung eines bekannten in Stern-verschalteten BLDC-Motors M der Figur 1 erkennt, ist die Differenz der Spannungen die Strangspannung des BLDC-Motors M. Unter Vernachlässigung des Spannungsabfalls an dem Widerstand und der Induktivität entspricht die gemessene Spannungsdifferenz näherungsweise der induzierten Spannung EMK des BLDC-Motors M. Die induzierte Spannung EMK ist proportional zur Drehzahl des BLDC-Motors M, weshalb sich aus diesem proportionalen Zusammenhang, siehe Figur 4, die Drehzahl des BLDC-Motors M bestimmen lässt. Sowohl der ohmsche Widerstand als auch die Induktivität des BLDC-Motors M sollten dabei relativ klein sein, damit das Verfahren möglichst verlässlich und genau angewendet werden kann. Dies ist üblicherweise bei kompakten BLDC-Motoren M der Fall, welche in Akkusaugern eingesetzt werden.

Hierauf aufbauend kann erfindungsgemäß zum einen ein Verfahren durchgeführt werden, indem ein Bestromen 100 von zwei Phasen U, V, W, ein Erfassen 200 der Phasenspannung U_{Phase}, ein Erfassen 250 der Sternpunktspannung, ein Ermitteln 300 der Differenzspannung ΔU als Differenz der erfassten Phasenspannung U_{Phase} und der erfassten Sternpunktspannung, ein Ermitteln 400a eines ersten Vorzeichenwechsels der ermittelten Differenzspannung ΔU zu einem ersten Zeitpunkt, ein Ermitteln 450a eines zweiten Vorzeichenwechsels der gleichen Richtung der ermittelten Differenzspannung ΔU zu einem zweiten Zeitpunkt, ein Ermitteln 500a der Zeitdifferenz zwischen dem ersten Zeitpunkt des ersten Vorzeichenwechsels und dem zweiten Zeitpunkt des zweiten Vorzeichenwechsels und ein Ermitteln 550a der Drehzahl des bürstenlosen Motors M basierend auf der ermittelten Zeitdifferenz erfolgt.

Auf diese Art und Weise kann eine Frequenzmessung der Differenzspannung ΔU erfolgen, indem durch einen Vorzeichenwechsel beim Vergleich der gefilterten Phasenspannung U_{Phase} und der gefilterten Sternpunktspannung an einem Komparator getriggert wird. Dabei wird nur auf die positive oder auf die negative Flanke getriggert und ein Interrupt ausgelöst. Ein gekoppelter Counter erfasst die Anzahl der Clockzyklen bis zum erneuten Auftreten des nächsten Interrupts und ermittelt damit die Frequenz der Differenzspannung ΔU. Die Erfassung der Drehzahl ist in der Figur 5 exemplarisch (idealisiert) dargestellt.

Zum anderen kann erfindungsgemäß ein Verfahren durchgeführt werden, indem ein Bestromen 100 des Motors M, ein Erfassen 200 der Phasenspannung U_{Phase}, ein Erfassen 250 der Sternpunktspannung, ein Ermitteln 300 der Differenzspannung ΔU als Differenz der erfassten Phasenspannung U_{Phase} und der erfassten Sternpunktspannung, ein Ermitteln 400b wenigstens eines Extremwerts der ermittelten Differenzspannung ΔU und ein Ermitteln 450b der Drehzahl des bürstenlosen Motors M basierend auf dem ermittelten Extremwert erfolgt.

Auf diese Art und Weise kann eine Spannungsmessung erfolgen, indem durch eine geeignete Abtastung der Differenzspannung auch der Verlauf der Differenzspannung ΔU seitens der Steuerungseinheit S erfasst und sowohl der maximale als auch der minimale Wert in einer Periode bestimmt werden kann. Die Differenzspannung ΔU ist proportional zur Drehzahl und somit lässt sich mit einem oder mit beiden Werten die Drehzahl bestimmen.

Dieses zweite Verfahren kann dahingehend erweitert werden, dass das Ermitteln 400b für wenigstens zwei Extremwerte der ermittelten Differenzspannung ΔU erfolgt sowie dass ein Ermitteln 500b der Differenz zwischen den beiden ermittelten Extremwerten, ein Vergleichen 550b der ermittelten Differenz mit einem vorbestimmten Grenzwert und bei Überschreiten oder Erreichen des vorbestimmten Grenzwertes ein Auslösen 580b einer Reaktion, vorzugsweise ein Reduzieren 580b oder ein Beenden 580b des Bestromens 100 der zwei Phasen U, V, W, erfolgt.

Mit anderen Worten müssen der bestimmte maximale und minimale Wert der ermittelten Differenzspannung ΔU während einer Periode betragsmäßig nahezu identisch sein. Ist die Differenz beider Werte größer als ein bestimmter Grenzwert, so ist die Spannungsmessung falsch bzw. es liegt ein Fehler vor. Hierdurch kann das zweite Verfahren für sich selbst plausibilisiert werden, wodurch das Ermitteln einer falschen Drehzahl gemäß des zweiten Verfahrens vermieden werden kann. Dies kann die Sicherheit bzw. Verlässlichkeit dieses zweiten Verfahrens an sich erhöhen.

Es können auch beide zuvor beschriebenen erfindungsgemäßen Verfahren parallel zueinander durchgeführt und deren ermittelte Drehzahlen gegenüber einander plausibilisiert werden, indem ein Ermitteln 600d der Differenz zwischen den beiden ermittelten Drehzahlen, ein Vergleichen 650d der ermittelten Differenz mit einem vorbestimmten Grenzwert und bei Überschreiten des vorbestimmten Grenzwertes ein Auslösen 700d einer Reaktion, vorzugsweise ein Reduzieren 700d oder ein Beenden 700d des Bestromens 100 erfolgt.

Hierbei handelt es sich um eine Kombination aus der Frequenzmessung des ersten Verfahrens und aus der Spannungsmessung der erfassten Spannungsdifferenz des zweiten Verfahrens. Dabei wird, wie zuvor als erstes Verfahren beschrieben, aus der Frequenzmessung der ermittelten Differenzspannung ΔU zum einen die Drehzahl ermittelt. Die Drehzahl wird parallel zum anderen ebenfalls aus der Amplitude der ermittelten Differenzspannung ΔU ermittelt, wie zuvor als zweites Verfahren beschrieben. Beide ermittelten Drehzahlen müssen nahezu identisch sein. Ist die Abweichung der Werte größer als ein bestimmter Grenzwert, liegt ein Fehler in der Messwerterfassung und bzw. oder Auswertung vor. Eine sichere bzw. verlässliche Temperaturüberwachung des BLDC-Motors M basierend auf seiner ermittelten Drehzahl ist dann nicht gegeben.

Die Vorteile der erfindungsgemäßen Verfahren sowie der entsprechenden Ansteuerungsvorrichtungen können darin gesehen werden, dass sich durch die Messung von zwei gefilterten elektrischen Größen die Drehzahl des BLDC-Motors M zum einen erfassen und zum anderen unabhängig plausibilisieren lässt. Die Plausibilisierung ist aus Approbationssicht unabdingbar, wenn sicherheitsgerichtete Software zum thermischen Schutz des BLDC-Motors M eingesetzt wird. Man kann durch die Drehzahlmessung den Stillstand des BLDC-Motors M erkennen und abschalten. Außerdem können drehzahlabhängige Stromgrenzen in der Software eingestellt werden, welche ebenfalls zur Absicherung des BLDC-Motors M vorteilhaft sein können.

### Bezugszeichenliste (Bestandteil der Beschreibung)

- C1-C7: Kondensatoren
- D1-D6: Dioden der B6-Brücke
- T1-T6: Transistoren der B6-Brücke
- R1-R13: ohmsche Widerstände
- V_{DC}: Zwischenkreisspannung
- U: Phase
- V: Phase
- W: Phase
- U_{Phase}: Phasenspannung
- ΔU: induzierte Spannung; elektromotorische Kraft
- M: (dreiphasiger) bürstenloser Motor; BLDC-Motor
- S: Steuerungseinheit; Rechner; geregelter Frequenzumrichter

- 100: Bestromen
- 200: Erfassen der Phasenspannung U_{Phase}
- 250: Erfassen der Sternpunktspannung
- 300: Ermitteln der Differenzspannung ΔU
- 400a: Ermitteln eines ersten Vorzeichenwechsels zu einem ersten Zeitpunkt
- 400b: Ermitteln wenigstens eines Extremwerts
- 450a: Ermitteln eines zweiten Vorzeichenwechsels zu einem zweiten Zeitpunkt
- 450b: Ermitteln der Drehzahl basierend auf dem ermittelten Extremwert
- 500a: Ermitteln der Zeitdifferenz zwischen dem ersten Zeitpunkt des ersten Vorzeichenwechsels und dem zweiten Zeitpunkt des zweiten Vorzeichenwechsels
- 500b: Ermitteln der Differenz zwischen den beiden ermittelten Extremwerten
- 550a: Ermitteln der Drehzahl basierend auf der ermittelten Zeitdifferenz
- 550b: Vergleichen der ermittelten Differenz mit einem vorbestimmten Grenzwert
- 580b: Auslösen einer Reaktion
- 600c: Vergleichen der ermittelten Drehzahl mit einer vorbestimmten Drehzahl
- 600d: Ermitteln der Differenz zwischen den beiden ermittelten Drehzahlen
- 650d: Vergleichen der ermittelten Differenz mit einem vorbestimmten Grenzwert
- 700c: Reduzieren oder Beenden des Bestromens 100
- 700d: Auslösen einer Reaktion

## Patentansprüche

1. Verfahren zur thermischen Überwachung eines mindestens zweiphasigen bürstenlosen Motors (M) ohne Rotorlagesensor, mit wenigstens den Schritten:
• Bestromen (100) des Motors (M), wobei die Phasenspannung (UPhase) des Bestromens (100) vorzugsweise mittels PWM-Steuerung eingestellt wird,
• Erfassen (200) der Phasenspannung (UPhase),
• Erfassen (250) der Sternpunktspannung,
• Ermitteln (300) der Differenzspannung (ΔU) zwischen der erfassten Phasenspannung (UPhase) und der erfassten Sternpunktspannung,
• Ermitteln (400a) eines ersten Vorzeichenwechsels der ermittelten Differenzspannung (ΔU) zu einem ersten Zeitpunkt,
• Ermitteln (450a) eines zweiten Vorzeichenwechsels der gleichen Richtung der ermittelten Differenzspannung (ΔU) zu einem zweiten Zeitpunkt,
• Ermitteln (500a) der Zeitdifferenz zwischen dem ersten Zeitpunkt des ersten Vorzeichenwechsels und dem zweiten Zeitpunkt des zweiten Vorzeichenwechsels,
• Ermitteln (550a) der Drehzahl des bürstenlosen Motors (M) basierend auf der ermittelten Zeitdifferenz, **gekennzeichnet durch**
• Ermitteln (400b) wenigstens eines Extremwerts der ermittelten Differenzspannung (ΔU),
• Ermitteln (450b) der Drehzahl des bürstenlosen Motors (M) basierend auf dem ermittelten Extremwert,
• Vergleichen (600c) der jeweils ermittelten Drehzahl mit einer vorbestimmten Drehzahl,
bei jeweils Unterschreiten oder bei jeweils Erreichen der vorbestimmten Drehzahl, Reduzieren (700c) oder Beenden (700c) des Bestromens (100) des Motors (M), Ermitteln (600d) der Differenz zwischen den beiden ermittelten Drehzahlen,· Vergleichen (650d) der ermittelten Differenz mit einem vorbestimmten Grenzwert, und·bei Überschreiten des vorbestimmten Grenzwertes, Auslösen (700d) eines Reduzierens (700d) oder Beendens (700d) des Bestromens (100) des Motors (M).

2. Verfahren nach Anspruch 1, **dadurch gekennzeichnet, dass**
das Ermitteln (400b) für wenigstens zwei Extremwerte der ermittelten Differenzspannung (ΔU) erfolgt, und
mit den weiteren Schritten:
• Ermitteln (500b) der Differenz zwischen den beiden ermittelten Extremwerten,
• Vergleichen (550b) der ermittelten Differenz mit einem vorbestimmten Grenzwert, und
• bei Überschreiten oder Erreichen des vorbestimmten Grenzwertes, Auslösen (580b) einer Reaktion, vorzugsweise Reduzieren (580b) oder Beenden (580b) des Bestromens (100) des Motors (M).

3. Verfahren nach einem der vorangehenden Ansprüche, **dadurch gekennzeichnet, dass**
das Erfassen (200) der Phasenspannung (UPhase) gefiltert erfolgt.

4. Verfahren nach einem der vorangehenden Ansprüche, **dadurch gekennzeichnet, dass**
das Erfassen (250) der Sternpunktspannung gefiltert erfolgt.

5. Ansteuerungsvorrichtung zur thermischen Überwachung eines mindestens zweiphasigen bürstenlosen Motors (M) ohne Rotorlagesensor,
mit einer Steuerungseinheit (S), welche ausgebildet ist, den Motor (M) zu bestromen, wobei die Phasenspannung (UPhase) des Bestromens (100) vorzugsweise mittels PWM-Steuerung eingestellt wird, und
mit einer Abtasteinrichtung, welche ausgebildet ist, die Phasenspannung (UPhase) und die Sternpunktspannung zu erfassen,
wobei die Steuerungseinheit (S) ferner ausgebildet ist,
die Differenzspannung (ΔU) als Differenz der erfassten Phasenspannung (UPhase) und der erfassten Sternpunktspannung zu ermitteln,
einen ersten Vorzeichenwechsel der ermittelten Spannung (ΔU) zu einem ersten Zeitpunkt zu ermitteln,
einen zweiten Vorzeichenwechsel der gleichen Richtung der ermittelten Spannung (ΔU) zu einem zweiten Zeitpunkt zu ermitteln,
die Zeitdifferenz zwischen dem ersten Zeitpunkt des ersten Vorzeichenwechsels und dem zweiten Zeitpunkt des zweiten Vorzeichenwechsels zu ermitteln, und
die Drehzahl des bürstenlosen Motors (M) basierend auf der ermittelten Zeitdifferenz zu ermitteln,
wenigstens einen Extremwert der ermittelten Differenzspannung (ΔU) zu ermitteln,
die Drehzahl des bürstenlosen Motors (M) basierend auf der ermittelten Zeitdifferenz zu ermitteln, **dadurch gekennzeichnet, dass** die Steuereinheit (S) weiter ausgebildet ist, wenigstens einen Extremwert der ermittelten Differenzspannung (ΔU) zu ermitteln, die Drehzahl des bürstenlosen Motors (M) basierend auf dem ermittelten Extremwert zu ermitteln, die jeweils ermittelte Drehzahl mit einer vorbestimmten Drehzahl zu vergleichen (600c), bei jeweils Unterschreiten oder bei jeweils Erreichen der vorbestimmten Drehzahl das Bestromen (100) des Motors (M) zu reduzieren (700c) oder zu beenden (700c),
die Differenz zwischen den beiden ermittelten Drehzahlen zu ermitteln (600d),
die ermittelte Differenz mit einem vorbestimmten Grenzwert zu vergleichen (650d), und
bei Überschreiten des vorbestimmten Grenzwertes ein Reduzieren (700d) oder Beenden (700d) des Bestromens (100) des Motors (M) auszulösen.

6. Ansteuerungsvorrichtung nach Anspruch 5, wobei die Steuerungseinheit (S) ferner ausgebildet ist,
das Ermitteln (400b) für wenigstens zwei Extremwerte der ermittelten Differenzspannung (ΔU) auszuführen,
die Differenz zwischen den beiden ermittelten Extremwerten zu ermitteln (500b),
die ermittelte Differenz mit einem vorbestimmten Grenzwert zu vergleichen (550b), und
bei Überschreiten oder Erreichen des vorbestimmten Grenzwertes ein Reduzieren (700d) oder Beenden (700d) des Bestromens (100) des Motors (M) auszulösen.

7. Mindestens dreiphasiger bürstenloser Motor (M) ohne Rotorlagesensor, mit einer Ansteuerungsvorrichtung nach Anspruch 5 oder 6.

8. Haushaltsgerät mit mindestens einem mindestens zweiphasigen bürstenlosen Motor (M) nach Anspruch 7.

9. Haushaltsgerät nach Anspruch 8, **dadurch gekennzeichnet, dass**
das Haushaltsgerät einen, vorzugsweise wiederaufladbaren, elektrischen Energiespeicher aufweist und ausgebildet ist, mittels der gespeicherten elektrischen Energie des elektrischen Energiespeichers betrieben zu werden.

## Claims

1. Method for thermally monitoring an at least two-phase brushless motor (M) without a rotor position sensor, the method comprising at least the following steps:
• energising (100) the motor (M), wherein the phase voltage (UPhase) of the energisation (100) is preferably adjusted by means of PWM control,
• detecting (200) the phase voltage (UPhase),
• detecting (250) the star point voltage,
• determining (300) the differential voltage (ΔU) between the detected phase voltage (UPhase) and the detected star point voltage,
• determining (400a) a first sign change of the determined differential voltage (ΔU) at a first point in time,
• determining (450a) a second sign change in the same direction of the determined differential voltage (ΔU) at a second point in time,
• determining (500a) the time difference between the first point in time of the first sign change and the second point in time of the second sign change,
• determining (550a) the rotational speed of the brushless motor (M) based on the determined time difference, **characterised by**
• determining (400b) at least one extreme value of the determined differential voltage (ΔU),
• determining (450b) the rotational speed of the brushless motor (M) based on the determined extreme value,
• comparing (600c) the determined rotational speed in each case with a predetermined rotational speed,
reducing (700c) or terminating (700c) the energisation (100) of the motor (M) when the predetermined rotational speed is not met or is reached, respectively, determining (600d) the difference between the two determined rotational speeds, comparing (650d) the determined difference with a predetermined threshold value, and triggering (700d) a reduction (700d) or termination (700d) of the energisation (100) of the motor (M) when the predetermined threshold value is exceeded.

2. Method according to claim 1, **characterised in that**
the determination (400b) is carried out for at least two extreme values of the determined differential voltage (ΔU) and
comprising the further steps:
• determining (500b) the difference between the two determined extreme values,
• comparing (550b) the determined difference with a predetermined threshold value, and
• triggering (580b) a reaction, preferably reducing (580b) or terminating (580b) the energisation (100) of the motor (M), when the predetermined threshold value is exceeded or reached.

3. Method according to either of the preceding claims, **characterised in that** the detection (200) of the phase voltage (UPhase) is filtered.

4. Method according to any of the preceding claims, **characterised in that** the detection (250) of the star point voltage is filtered.

5. Control apparatus for thermally monitoring an at least two-phase brushless motor (M) without a rotor position sensor,
comprising a control unit (S) which is designed to energise the motor (M), wherein the phase voltage (UPhase) of the energisation (100) is preferably adjusted by means of PWM control, and
comprising a scanning device which is designed to detect the phase voltage (UPhase) and the star point voltage,
wherein the control unit (S) is further designed
to determine the differential voltage (ΔU) as the difference between the detected phase voltage (UPhase) and the detected star point voltage,
to determine a first sign change of the determined voltage (ΔU) at a first point in time,
to determine a second sign change in the same direction of the determined voltage (ΔU) at a second point in time,
to determine the time difference between the first point in time of the first sign change and the second point in time of the second sign change, and
to determine the rotational speed of the brushless motor (M) based on the determined time difference,
to determine at least one extreme value of the determined differential voltage (ΔU),
to determine the rotational speed of the brushless motor (M) based on the determined time difference, **characterised in that** the control unit (S) is further designed to determine at least one extreme value of the determined differential voltage (ΔU), to determine the rotational speed of the brushless motor (M) based on the determined extreme value, to compare (600c) the determined rotational speed with a predetermined rotational speed in each case,
to reduce (700c) or terminate (700c) the energisation (100) of the motor (M) when the predetermined rotational speed is not met or is reached, respectively,
to determine (600d) the difference between the two determined rotational speeds,
to compare (650d) the determined difference with a predetermined threshold value, and
to trigger a reduction (700d) or termination (700d) of the energisation (100) of the motor (M) when the predetermined threshold value is exceeded.

6. Control apparatus according to claim 5, wherein the control unit (S) is further designed
to carry out the determination (400b) for at least two extreme values of the determined differential voltage (ΔU),
to determine (500b) the difference between the two determined extreme values,
to compare (550b) the determined difference with a predetermined threshold value, and
to trigger a reduction (700d) or termination (700d) of the energisation (100) of the motor (M) when the predetermined threshold value is exceeded or reached.

7. Brushless motor (M), which is at least three-phase, without a rotor position sensor, comprising a control apparatus according to claim 5 or 6.

8. Domestic appliance comprising at least one at least two-phase brushless motor (M) according to claim 7.

9. Domestic appliance according to claim 8, **characterised in that**
the domestic appliance comprises a preferably rechargeable electrical energy store and is designed to be operated by means of the stored electrical energy of the electrical energy store.

## Revendications

1. Procédé pour la surveillance thermique d'un moteur (M) sans balais à au moins deux phases sans capteur de position de rotor, comportant au moins les étapes consistant à :
• alimenter en courant (100) le moteur (M), dans lequel la tension de phase (UPhase) de l'alimentation en courant (100) est de préférence réglée au moyen d'une commande MIL,
• détecter (200) la tension de phase (UPhase),
• détecter (250) la tension de point neutre,
• déterminer (300) la tension différentielle (ΔU) entre la tension de phase (UPhase) détectée et la tension de point neutre détectée,
• déterminer (400a) un premier changement de signe de la tension différentielle (ΔU) déterminée à un premier moment,
• déterminer (450a) un second changement de signe de même sens de la tension différentielle (ΔU) déterminée à un second moment,
• déterminer (500a) la différence de temps entre le premier moment du premier changement de signe et le second moment du second changement de signe,
• déterminer (550a) la vitesse de rotation du moteur (M) sans balais sur la base de la différence de temps déterminée, **caractérisé par**
• la détermination (400b) d'au moins une valeur extrême de la tension différentielle (ΔU) déterminée,
• la détermination (450b) de la vitesse de rotation du moteur (M) sans balais sur la base de la valeur extrême déterminée,
• la comparaison (600c) de la vitesse de rotation respectivement déterminée avec une vitesse de rotation prédéterminée,
en cas de non-atteinte respective ou en cas d'atteinte respective
de la vitesse de rotation prédéterminée, la réduction (700c)
ou l'arrêt (700c) de l'alimentation en courant (100) du moteur (M),
la détermination (600d) de la différence entre les deux vitesses de rotation déterminées, la comparaison (650d) de la
différence déterminée avec une valeur limite prédéfinie, et en cas de dépassement de la valeur limite prédéfinie,
le déclenchement (700d) d'une réduction
(700d) ou d'un arrêt (700d) de l'alimentation en courant (100) du moteur (M).

2. Procédé selon la revendication 1, **caractérisé en ce que**
la détermination (400b) est effectuée pour au moins deux valeurs extrêmes de la tension différentielle (ΔU) déterminée, et
comportant les étapes supplémentaires consistant à :
• déterminer (500b) la différence entre les deux valeurs extrêmes déterminées,
• comparer (550b) la différence déterminée avec une valeur limite prédéfinie, et
• en cas de dépassement ou d'atteinte de la valeur limite prédéfinie, déclencher (580b) une réaction, de préférence réduire (580b) ou arrêter (580b) l'alimentation en courant (100) du moteur (M).

3. Procédé selon l'une des revendications précédentes,
**caractérisé en ce que** la détection (200) de la tension de phase (UPhase) est effectuée de manière filtrée.

4. Procédé selon l'une des revendications précédentes,
**caractérisé en ce que** la détection (250) de la tension de point neutre est effectuée de manière filtrée.

5. Dispositif de commande pour la surveillance thermique d'un moteur (M) sans balais à au moins deux phases sans capteur de position de rotor,
comportant une unité de commande (S) qui est configurée pour alimenter en courant le moteur (M), dans lequel la tension de phase (UPhase) de l'alimentation en courant (100) est de préférence réglée au moyen d'une commande MIL, et
comportant un appareil de balayage qui est configuré pour détecter la tension de phase (UPhase) et la tension de point neutre,
dans lequel l'unité de commande (S) est en outre configurée pour
déterminer la tension différentielle (ΔU) comme différence entre la tension de phase (UPhase) détectée et la tension de point neutre détectée,
déterminer un premier changement de signe de la tension (ΔU) déterminée à un premier moment,
déterminer un second changement de signe de même sens de la tension (ΔU) déterminée à un second moment,
déterminer la différence de temps entre le premier moment du premier changement de signe et le second moment du second changement de signe, et
déterminer la vitesse de rotation du moteur (M) sans balais sur la base de la différence de temps déterminée,
déterminer au moins une valeur extrême de la tension différentielle (ΔU) déterminée,
déterminer la vitesse de rotation du moteur (M) sans balais sur la base de la différence de temps déterminée, **caractérisé en ce que** l'unité de commande (S) est en outre configurée pour déterminer au moins une valeur extrême de la tension différentielle (ΔU) déterminée, pour déterminer la vitesse de rotation du moteur (M) sans balais sur la base de la valeur extrême déterminée, pour comparer (600c) la vitesse de rotation respectivement déterminée avec une vitesse de rotation prédéfinie, en cas de non-atteinte respective ou en cas d'atteinte respective
de la vitesse de rotation prédéfinie, pour réduire (700c) ou pour arrêter (700c) l'alimentation en courant (100) du moteur (M),
pour déterminer (600d) la différence entre les deux vitesses de rotation déterminées,
pour comparer (650d) la différence déterminée avec une valeur limite prédéfinie, et
en cas de dépassement de la valeur limite prédéfinie, pour déclencher une réduction (700d) ou un arrêt (700d) de l'alimentation en courant (100) du moteur (M).

6. Dispositif de commande selon la revendication 5, dans lequel l'unité de commande (S) est en outre configurée pour
réaliser la détermination (400b) pour au moins deux valeurs extrêmes de la tension différentielle (ΔU) déterminée,
déterminer (500b) la différence entre les deux valeurs extrêmes déterminées,
comparer (550b) la différence déterminée avec une valeur limite prédéfinie, et
en cas de dépassement ou d'atteinte de la valeur limite prédéfinie, déclencher une réduction (700d) ou un arrêt (700d) de l'alimentation en courant (100) du moteur (M).

7. Moteur (M) sans balais à au moins trois phases sans capteur de position de rotor, comportant un dispositif de commande selon la revendication 5 ou 6.

8. Appareil électroménager comportant au moins un moteur (M) sans balais à au moins deux phases selon la revendication 7.

9. Appareil électroménager selon la revendication 8, **caractérisé en ce que**
l'appareil électroménager présente un accumulateur d'énergie électrique, de préférence rechargeable, et est configuré pour fonctionner au moyen de l'énergie électrique accumulée de l'accumulateur d'énergie électrique.
